# EUROPEAN PATENT APPLICATION

(11) **EP 4 810 925 A1**
(43) Date of publication of application: **23.09.2026**
(21) Application number: 25164856.4
(22) Date of filing: 19.03.2025
(51) Int. Cl.: G01J 3/02, G01J 3/18, G01J 3/28

(54) **SPECTROMETER AND METHOD FOR PROVIDING A SPECTROMETER**

(71) Applicant: Leibniz-Institut für Astrophysik Potsdam (AIP), 14482 Potsdam, Brandenburg (DE)
(72) Inventor: Günther, Alan, 14467 Potsdam (DE); Diab, Momen, Toronto, M4Y 0H5 (CA); Madhav, Kalaga, 14482 Potsdam (DE)
(74) Representative: Heinemeyer, Karsten

(57) **Abstract**

The invention relates to a spectrometer (100), comprising
- a plurality of optical fibres (110), wherein each fibre (112) is coupled with a respectively allocated waveguide (114) within a structured surface grating module (120) of the spectrometer,
- the structured surface grating module is configured to provide a plurality of light outputs (122) by providing a grating structure (124) for each allocated waveguide, wherein each grating structure provides a respective light output which forms a part of the plurality of light outputs,
- a detection unit (130) which is arranged and configured to receive the plurality of light outputs, to detect optical characteristics within the plurality of light outputs and to provide a detection signal (132) which indicates at least a part of the detected optical characteristics.

## Description

### FIELD OF THE INVENTION

The invention relates to a spectrometer. Furthermore, the invention relates to a satellite comprising at least one spectrometer, to a method for providing a spectrometer and to a computer program.

### BACKGROUND OF THE INVENTION

Spectrometers are well-known devices for optical analyses. In particular in the field of satellite telescopes a spectrometer is usually used to provide information concerning the observed object. Numerous methods for splitting light into its spectral components are known in the art. Usually, such methods rely on the use of gratings and prisms which are individually adjusted and aligned. The required optical equipment usually occupies significant space when multiple spectra need to be recorded simultaneously from various sources.

Facilities like 4MOST at "Visible and infrared Survey Telescope for Astronomy" (VISTA) or MOSAIC at the "Extremely Large Telescope" (ELT) can capture up to 2400 individual spectra simultaneously by coupling light from individual stellar objects into separate fibers. Within the spectrograph, these fibers serve as a slit, but the light from each individual fiber is dispersed separately, enabling the functionality of a multi-object spectrograph.

It is furthermore known to provide a spectrometer that is based on a grating on the surface of a waveguide ("Photonic Crystal Spectrometer", Pervez et al., Opt. Express 18, 8 (2010) 8277; "A Simple Miniature Optical Spectrometer with Planar Waveguide Grating Coupler in Combination with a Plano-Convex Lens", Chaganti et al., Opt. Express 14, 9 (2006) 4064). Such structures can reduce the space needed for the spectrometer to capture multiple spectra simultaneously.

It is an object of the invention to provide an improved spectrometer, in particular to provide a spectrometer which is lightweight, mechanically robust and/or thermally stable.

### SUMMARY OF THE INVENTION

According to a first aspect of the invention, a spectrometer is provided, comprising
- a plurality of optical fibres, wherein each fibre is coupled with a respectively allocated waveguide within a structured surface grating module of the spectrometer,
- the structured surface grating module is configured to provide a plurality of light outputs by providing a grating structure for each allocated waveguide, wherein each grating structure provides a respective light output which forms a part of the plurality of light outputs,
- a detection unit which is arranged and configured to receive the plurality of light outputs, to detect optical characteristics within the plurality of light outputs and to provide a detection signal which indicates at least a part of the detected optical characteristics.

The spectrometer according the first aspect of the invention allows a lightweight structure by coupling a fiber with a waveguide that is connected to the grating structure for providing the respective light output. The light output is formed by the light that is transmitted from the fiber into the allocated waveguide to be diffracted out of the allocated waveguide by the respective grating structure. Depending on the Bragg condition, each wavelength of the transmitted light is diffracted into different angles to a grating plane of the grating structure. Each optical fiber and/or number of fibres can represent a certain observed object and thereby the spectrometer can provide multiple spectra in a robust way.

Using the structured surface grating module for the plurality of optical fibres allows a structured appearance of the provided plurality of light outputs and thereby an easy analysis and detection of the light output on a restricted area is possible. Thereby a reliable detection can be supported.

Furthermore, the structured surface grating module can support a small size of the spectrometer and thereby allows a small volume to be occupied, as for example within a respective satellite with said spectrometer.

The allocated waveguides together with the structured surface grating module can be advantageously produced automatically such as by executing a lithographic manufacturing process. Furthermore, such a process is well known in the art of optical chips or the like so that a reliable and automatable production of the spectrometer according to the first aspect of the invention is possible.

Preferably, one optical fibre of the plurality of optical fibres is exactly allocated to one waveguide such that the light of the optical fibre can be diffracted by the grating of the structured surface grating module and studied by the detection unit.

The structured surface grating module is structured in the sense that a predefined structure of waveguides is arranged such that each waveguide leads to exactly one grating within an array of gratings. Preferably, the array of gratings is formed by a regular pattern. Such a regular pattern can simplify an automatized manufacture of the structured surface grating module. The structured surface grating module is a module with a structured surface that includes the grating structure. In that sense the allocated waveguides are formed at least partly within the structured surface grating module.

The detection unit can provide the detection signal on its own and/or trigger the output of this detection signal by a further device and/or a further unit. The detection signal can indicate all detected optical characteristics or a predefined subset of detected optical characteristics. The detected optical characteristics can be directly detected optically and/or indirectly detected by a further analysis of the received light beams provided by the structured surface grating module.

The optical characteristics are preferably spectral characteristics, such as a received spectral distribution and/or an intensity distribution.

The fibre coupling can be accomplished by using V-groove separators, lensed fibres and/or other well-known techniques.

The components of the spectrometer according to the first aspect of the invention can be provided in a common housing or in at least two separate housings which are preferably adjacent to each other.

The spectrometer can also comprise more than one structured surface grating module and/or more than one detection unit. Thereby specific optical requirements within a confined space for the spectrometer for providing multiple spectra can be taken into account.

It is clear for someone skilled in the art that the invention is not limited to spectrometers within astronomical application. The spectrometer according to the first aspect of the invention can also be used for applications that differ from the application given in the following but also contain the studying of spectral characteristics of optically recorded objects, such as for material detection within recycling processes or the like.

In the following, embodiments of the spectrometer according to the first aspect of the invention will be described.

In a preferred embodiment, the spectrometer according to the first aspect of the invention is further comprising an optical system which is arranged between the structured surface grating module and the detection unit and which is configured to provide a predefined spectrographic image structure of the plurality of light outputs. The use of an optical system can lead to an improved control of the plurality of light outputs. In particular, the optical system can redirect, focus and/or collimate beams of the plurality of light outputs in order to enable an improved detection of the plurality of light outputs by the detection unit. Preferably, the optical system comprises a plurality of lenses. Such a plurality of lenses can facilitate a simple production and arrangement of the optical system.

In a preferred embodiment, the structured surface grating module and/or the optical system provide a cross-dispersion of the respective light outputs. The cross-dispersion is advantageous in order to separate multiple orders of dispersion that are superimposed at the respective output of the allocated waveguide. Preferably, the cross-dispersion is provided by the structured surface grating module which leads to a particularly high functionality of the structured surface grating module and thereby allows a structure without optical system or with a small and/or lightweight optical system.

In a preferred embodiment, the structured surface grating module as arranged in in combination with an arrayed waveguide grating, in particular comprises an arrayed waveguide grating. Preferably, the arrayed waveguide grating supports the provision of a cross-dispersion of the respective light outputs. The arrayed waveguide grating can provide a spectral selection of the transferred light and thereby allows a cross-dispersion as a result of the structured surface grating of the structured surface grating module which further splits the respective wavelengths as respective light outputs of the structured surface grating. The use of arrayed waveguide gratings is well-known in chip-like structures in order to provide a spectral selection of a light input.

In general, the spectrometer according to the first aspect may provide a cross dispersion via a combination of the structured surface grating with the optical system and/or via a combination with the arrayed waveguide grating according to the aforementioned embodiment.

In a preferred embodiment, the allocated waveguides within the structured surface grating module are planar waveguides. Such planar waveguides can be particularly thin and thereby allow a large number of parallelly arranged waveguides within the structured surface grating module. Furthermore, planar waveguides can be used in different layers of the structured surface grating module and/or within a chip containing the structured surface grating module. The optical characteristics within the planar waveguides can be precisely predefined by choosing the respective dimensions of the planar waveguide. Preferably, the planar waveguide is a Silicon or Ge doped Silica (SiO₂) waveguide.

In a preferred variant of the aforementioned embodiment, the structured surface grating module is a chip-based structured surface grating module, in particular a chip based arrayed waveguide grating. Such a chip-based structured surface grating module can be advantageously produced automatically and thereby in a reliable and reproducible way. Furthermore, such a chip-based structured surface grating module can be produced with a small size and can be easily transported to a final place für arranging the spectrometer according to the first aspect of the invention. Preferably, a cross-dispenser is integrated in the chip-based structured surface grating module. Thereby, the need of additional optical components between detection unit and the respective grating structure can be eliminated or reduced. In a further advantageous variant, the chip-based structured surface grating module is behind an arrayed waveguide grating within the respective chip-like structure. Thereby, the chip-like structure is further used to provide a spectral selection by means of the arrayed waveguide grating.

In a further variant of the aforementioned embodiment, the structured surface grating module is provided on a layered substrate. Such a layered substrate can provide a stable and reliable embedment of the respective waveguides and of the structured surface grating module. Furthermore, the layered substrate can define the optical characteristics on the boundary surface of the waveguides arranged within the layered substrate. An example of a layered grating structure is shown in "Grating Coupler Design for Vertical Light Coupling in Silicon Thin Films on Lithium Niobate" (Han et al., Crystals 10, No. 9 (2020), 850).

In a preferred embodiment, the structured surface grating module is provided by a lithographic manufacturing process. The lithographic processes preferably comprise the arrangement of different layers of material in order to provide a plurality of waveguides, in particular planar waveguides, for the structured surface grating module. By using the lithographic process, the packing density of the resulting spectrographs can be increased. Furthermore, individual optical charact eristics of each waveguide and/or each grating structure can be directly customized. Details of the realisation of such a lithographic manufacturing process are well-known to a person skilled in the art and are therefore not described in the following.

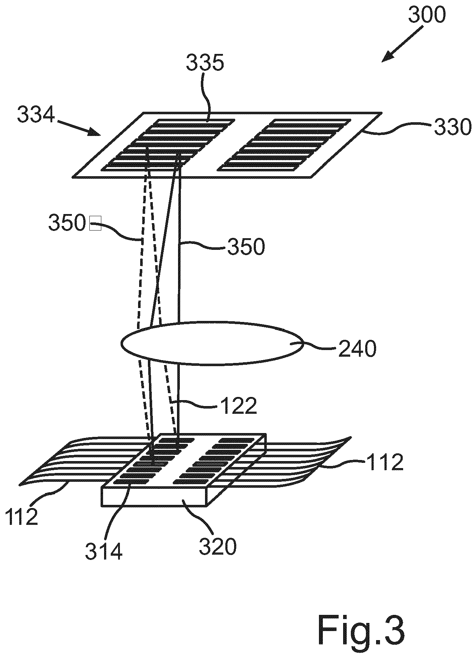

In a further embodiment of the spectrometer according to the first aspect of the invention, the optical fibres from the plurality of optical fibres at least partly provide different orientations with respect to the structured surface grating modules. By arranging the optical fibres at least partly with different orientations, a particularly large number of waveguides with a respectively large number of grating structures can be used for a single structured surface grating module. Examples for such structures are shown with respect to the embodiment in Fig. 3.

In a preferred embodiment, the plurality of optical fibres is at least partly formed by single-mode fibres. The single-mode fibres improve the use of the spectrometer as a multi-object spectrometer since there are not different modes of each signal that may interfere within the spectrometer. As a consequence, the respectively allocated waveguides are preferably formed as single-mode waveguides.

In a further embodiment, the coupling between an optical fibre from the plurality of optical fibres and the respectively allocated waveguide is provided as a butt-coupling and/or by a coupling via lensed fibres. Such a butt-coupling is well-known as a reliably coupling in photonic applications. In particular, a loss of information at the point of coupling is avoided. Usually, a core diameter of the transmitting fibre is smaller than the core diameter of the receiving waveguide and thereby the optical information transmitted from the optical fibre is completely received from the allocated waveguide. Details of possible surface structures for the butt-coupling of optical components are known to a person skilled in the art so that no respective details are given in the following. An alternative or additional coupling technique is a coupling via lensed fibres. Thereby a particularly precise coupling of a fibre with a respective waveguide is possible.

In a particularly preferred embodiment of the spectrometer according to the first aspect of the invention, areas of a detector surface of the detection unit correspond to an object to be measured with the spectrometer. The detector surface according to this embodiment allows the detection of optical characteristics of multiple spectra in parallel. In a preferred variant of this embodiment, an optical system is arranged between the structured surface grating module and the detection unit for all of the multiple spectra. In this embodiment, multiple objects to be measured can be studied in parallel with the same spectrometer. An object is preferably a pixel and/or an image point of an input image. The plurality of optical fibres can provide light of different pixels and/or image points of a common image and/or light of pixels and/or image points from different images. Thereby, the pixel and/or image point represents the object to be measured as input.

According to a second aspect of the invention, a satellite comprising at least one spectrometer according to the first aspect of the invention is provided, wherein a telescope of the satellite is configured to provide the plurality of optical fibres with image data, and wherein the satellite is further comprising a communication unit which is arranged and configured to provide the detection signal of the spectrometer.

The satellite according to the second aspect comprises the spectrometer according to the first aspect and therefore all advantages of this spectrometer. In particular, the satellite can be small and/or lightweight in view of the small size of the spectrometer. Furthermore, the small and/or lightweight spectrometer allows the satellite to comprise further equipment without becoming too heavy.

Furthermore, the spectrometer according to the first aspect of the invention advantageously allows the detection of a complete set of spectra by the satellite.

The communication unit of the satellite according to the second aspect of the invention is preferably configured to provide the detection signal and/or to trigger an external signal indicating the detection signal to an external device, such as a communication device that is arranged at a communication centre on earth.

The communication unit of the satellite can also be formed by the detection unit and/or comprise the detection unit. In particular, the communication unit and the detection unit can be formed by a common housing.

It is clear for someone skilled in the art that the spectrometer according to the first aspect can also be used for other application that are not related to satellites, such as stationary detection systems, microphysical detection system, marine detection systems or the like.

Applications that can be particularly advantageous with the spectrometer are for example: the local scrap identification on assembly lines using techniques like laser-induced Breakdown Spectroscopy; the spatial quality control through spectroscopic examination of specific spectral lines, e.g. through fluorescence and/or Raman scattering; the local detection of gases and/or other materials during flyovers; compact spectrometers for quantum applications. Such applications are not described in detail in the following but a person skilled in the art can directly see, how the compact, reliable and lightweight structure of the provided spectrometer can be useful and easily implemented for such applications.

According to a third aspect of the invention, a method for providing a spectrometer is provided. The method comprising the steps
- optically coupling each optical fibre of a plurality of optical fibres with a respectively allocated waveguide;
- providing each allocated waveguide with a grating structure in order to provide a respective light output;
- receiving of the plurality of light outputs and detecting optical characteristics within the plurality of light outputs;
- providing a detection signal which indicates at least a part of the detected optical characteristics.

The method according to the second aspect of the invention is executed by the spectrometer according to the first aspect of the invention and therefore shares the same advantages as the spectrometer.

In particular, the method also allows a robust and lightweight production of the spectrometer by coupling optical fibres and allocated waveguides together and by using the respective grating structure to provide the light outputs.

In a preferred embodiment of this method, the method is further comprising the step of providing the grating structures as a structured surface grating module by a lithographic manufacturing process. In this embodiment, the method can be at least partly executed automatically. Preferably, the allocated waveguides are also provided by the lithographic manufacturing process. In particular, the allocated waveguide can be provided as a layered waveguide on a layered substrate. Thereby a waveguide, such as a silicon waveguide, can be reliably provided in a repeatable manner.

According to a fourth aspect of the invention, a computer program for operating a system comprising program code means for causing a computer to carry out a method according to the third aspect of the invention is provided.

The computer which comprises the computer program may for instance form an integrated part of the spectrometer according to the first aspect of the invention and be implemented as a microcontroller or microprocessor. In another embodiment, the computer forms an integrated part of a control unit that is spatially separated from the further components of the spectrometer and configured to control a part of the spectrometer and/or its surrounding system.

It shall be understood that the spectrometer according to the first aspect of the invention, the satellite comprising at least one spectrometer according to the second aspect of the invention, the method for providing the spectrometer according to the third aspect of the invention, and the computer program for operating a system according to the fourth aspect of the invention have similar or identical embodiments. It shall be further understood that the spectrometer according to the first aspect of the invention can be used in applications that differ from the astrophysical applications that are emphasized in the following. As an example, the spectrometer according to the first aspect of the invention might also be used as a local spectrograph for material detection, such as within recycling processes.

These and other aspects of the invention will be apparent from and elucidated with reference to the embodiments described hereinafter.

### BRIEF DESCRIPTION OF THE DRAWINGS

In the following drawings:
- Fig. 1: shows a first embodiment of a spectrometer according to a first aspect of the invention;
- Fig. 2: shows a second embodiment of the spectrometer according to the first aspect of the invention;
- Fig. 3: shows a third embodiment of the spectrometer according to the first aspect of the invention;
- Fig. 4: shows an embodiment of a satellite according to a second aspect of the invention which is comprising at least one spectrometer according to the first aspect of the invention;
- Fig. 5: shows an embodiment of a method according to a third aspect of the invention.

### DETAILED DESCRIPTION OF EMBODIMENTS

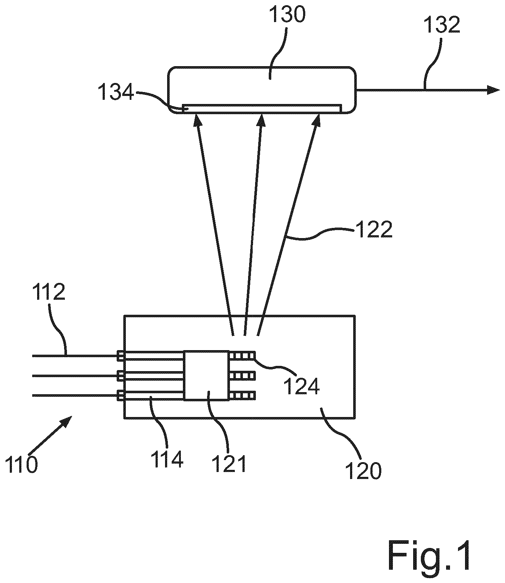

Fig. 1 shows a first embodiment of a spectrometer 100 according to a first aspect of the invention.

The spectrometer 100 comprises a plurality of optical fibres 110, a structured surface grating module 120 and a detection unit 130.

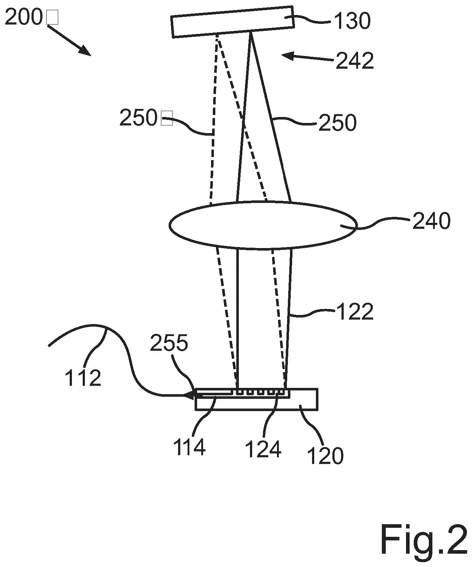

The plurality of optical fibres 110 is arranged such that each fibre 112 is coupled with a respectively allocated waveguide 114 within the structured surface grating module 120 of the spectrometer 100. The number of allocated waveguides 114 is preferably equal to the number of fibres 112 within the plurality of optical fibres 110. Preferably, each fibre 112 contains an optical signal during a use of the spectrometer 100 that indicates an optical information to be detected by the detection unit 130. The coupling between fibre 112 and waveguide can be provided in different ways. The embodiment of Fig. 1 shows a coupling via lensed fibres. Fig. 2 shows an embodiment with a so-called butt-coupling. Further coupling techniques are well-known in the art and will therefore not be described in the following.

The structured surface grating module 120 is configured to provide a plurality of light outputs 122 by providing a grating structure 124 for each allocated waveguide 114. For reasons of clarity, just three fibres 112 with respectively allocated waveguides 114 and the respective grating structure 124 are shown in Fig. 1. It is clear to someone skilled in the art that a larger number of fibres, waveguides and/or grating structures can be used to form the spectrometer according to the first aspect of the invention. In particular, at least 10, such as at least 20, preferably at least 25, fibres, waveguides and/or grating structures can be used to form the spectrometer according to the first aspect of the invention.

In order to avoid further optics behind the structured surface grating module 120, an arrayed waveguide grating 121 is arranged between the coupling into the waveguides 114 und the grating structure 124 of the structured surface grating module 120. Thereby, a spectral selection of the transferred light is provided leading to a cross-dispersion as a result of the structured surface grating module 120. Arrayed waveguide gratings are commonly known as optical multiplexer or demultiplexer that are able to provide a spectral selection of an optical signal.

Possible structures of such arrayed waveguide gratings are well-known and therefore not described in the following.

Each grating structure 124 provides a respective light output 126 which forms a part of the plurality of light outputs 122. Hence, the optical information indicated by the optical signal within the respective optical fibre 112 is transferred to the grating structure 124 by the allocated waveguide 114 via the arrayed waveguide grating 121 and afterwards dispersively extracted through the grating of the grating structure 124. The grating of the grating structure 124 is typically formed as a periodical structure. The precise dimensions of this periodical structure define the optical characteristics of the provided light output 122.

The detection unit 130 is arranged and configured to receive the plurality of light outputs 122, to detect optical characteristics within the plurality of light outputs 122 and to provide a detection signal 132 which indicates at least a part of the detected optical characteristics. The detection unit 130 comprises a detector surface 134, such as a photodetector, a digital camera, a CMOS image sensor or the like, which is arranged und configured to receive the light outputs 122 and to detect the optical characteristics by analysing the electrical signals transmitted by the detector surface 134. Possible structures of such a detection unit are well known in the art and therefore not explained in the following. In particular the analysis of the detection unit 130 in order to detect and evaluate the optical characteristics are already known from other spectrometers and therefore not discussed in the following.

In the embodiment shown in Fig. 1, the detection signal 132 is provided to a not shown external device. Additionally or alternatively, the detection signal can also be further processed internally by the spectrometer. Furthermore, the detection signal can also be triggered by the detection unit to be provided by a further device and not by the detection unit itself.

The communication of the detection unit 130 is preferably provided wirelessly. Additionally or alternatively, the detection signal 132 and/or a further signal can also be provided via a cable.

The optical signal that is to be received by a respective optical fibre or by a respective plurality of optical fibres is preferably received by an optical system arranged at a receiving side of the plurality of optical fibres. Such an optical system is external in the sense that it forms a component that is outside of the spectrometer according to the first aspect of the invention.

Fig. 2 shows a second embodiment of a spectrometer 200 according to the first aspect of the invention.

The spectrometer 200 is similar to the spectrometer 100 shown in Fig.1. It differs from the spectrometer 100 in the fact that it is further comprising an optical system 240 which is arranged between the structured surface grating module 120 and the detection unit 130 and which is configured to provide a predefined spectrographic image structure 242 of the plurality of light outputs. The optical system 240 is formed by a lens. In other not shown embodiments, the optical system can comprise further optical components, such as a prism, a collimator, a mirror, at least a further lense and/or the like.

As underlined by the two different beam paths 250, 250' for two different wavelengths in Fig.2, the structured surface grating module 120 and/or the optical system 240 provide a cross-dispersion of the respective light outputs 122. The cross-dispersion supports the detection of wavelength-related optical characteristics within the plurality of light outputs 122. In the embodiment shown in Fig. 1, such a cross-dispersion can be advantageously provided by the grating structure of the structured surface grating module in combination with the arrayed waveguide grating without the optical system.

The coupling between the plurality of fibres 112 and the respective allocated waveguide is advantageously provided via a so-called butt-coupling 255. This allows a particularly reliable optical transfer of an optical signal received by a respective optical fibre 112 to the allocated waveguide 114. In the shown embodiment, the plurality of optical fibres is at least partly formed by single-mode fibres. Such single-mode fibres can be particularly reliably coupled by the butt-coupling 255 and/or by a coupling via lensed fibres.

The waveguide is preferably made of silicon and provided on a substrate layer. The grating structure 124 of the structured surface grating module 120 is preferably made of silicon.

Fig. 3 shows a third embodiment of a spectrometer 300 according to the first aspect of the invention.

The spectrometer 300 is similar to the spectrometer 200 shown in Fig. 2 but differs in the design of the structured surface grating module 320 and of the detection unit 330.

The allocated waveguides 314 within the structured surface grating module 320 are at least partly, in particular completely, planar waveguides. In a not shown embodiment, at least one allocated waveguide is just partly planar and changes its cross section within the structured surface grating module.

The structured surface grating module 320 shown in Fig. 3 is a chip-based structured surface grating module. Such a chip-based design is characterized by the planar waveguides in combination with a carrier surface that carries the respective waveguide.

Preferably, the carrier completely surrounds a respective waveguide. Thereby, the optical characteristics at the lateral surface of the respective waveguide can stay constant at a predefined region of the structured surface grating module.

In the embodiment shown in Fig. 3, the structured surface grating module 320 is provided on a layered substrate. The layered substrate can for example be formed by a silicon substrate.

In contrast to the structured surface grating modules 120, shown in Figs. 1 and 2, the structured surface grating module 320 comprises waveguides 314 with different orientations, which are coupled to optical fibres 112 arriving from different orientations at the structured surface grating module 320. The two different orientations shown in Fig 3 are just exemplary. More and/or other orientations can also be provided for the waveguides within the structured surface grating module.

The spectrometer 300 shown in Fig. 3 is provided by using a lithographic manufacturing process. In particular, the structured surface grating module 320 is provided by a lithographic manufacturing process. Such a process allows a very precise and reliable manufacturing of the structured surface grating module 320.

The beam paths 350, 350' depicted in Fig. 3 are similar to the beam paths 250, 250' shown in Fig. 2, but the detection unit 330 is further configured to provide predefined areas 335 of the detector surface 334 that correspond to an object to be measured with the spectrometer 300. The object is preferably a point, such as a pixel, within an optical image of a thing to be studied. The predefined areas 335 in the depicted embodiment correspond to the number of different allocated waveguides 114 within the structured surface grating module 320. By using such predefined areas 335, the detection unit 330 can be controlled such that that the detection of characteristics is just provided at these areas. Thereby a particularly fast evaluation of the detected optical characteristics can be possible.

The optical system 240 in Fig. 3 is depicted as a single lens for reasons of clarity. Other optical components might be included into the optical system 240 in order to provide the image of the light outputs 122 in the depicted manner, in particular in order to provide the image of the light outputs 122 in the predefined areas 335 of the detector surface 334. It is particularly advantageous that the depicted images on the predefined areas 335 of the detector surface 334 can be provided by a common optical system 240. Thus, the spectrometer according to the first aspect of the invention allows a detection of multiple spectra by using a single optical system 240.

It is clear to someone skilled in the art, that the spectrometer 100 shown in Fig. 1 differs from the spectrometer 200, 300 as shown in Fig. 2 and 3 in the sense that a cross dispersion is provided by the combination of arrayed waveguide grating and structured surface grating while the cross dispersion in the embodiments of Fig. 2 and 3 is provided by the combination of structured surface grating and the optical system.

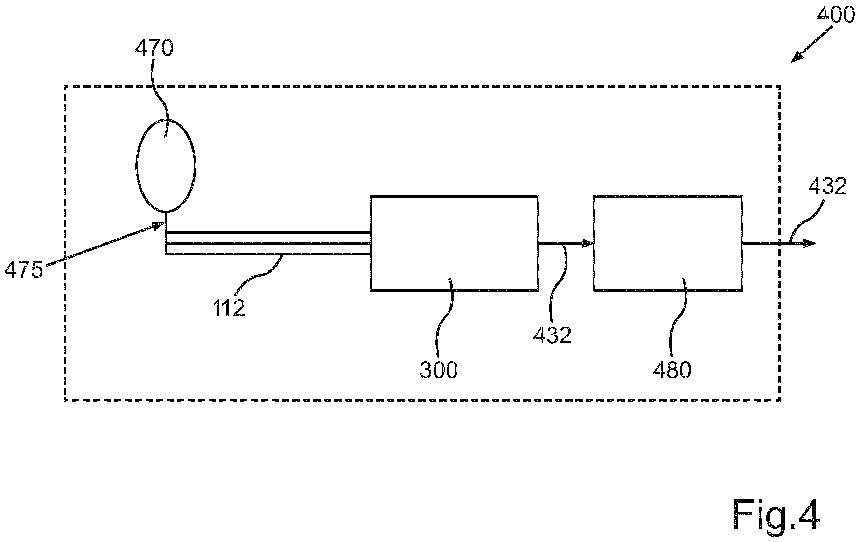

Fig. 4 shows an embodiment of a satellite 400 according to a second aspect of the invention which is comprising at least one spectrometer 300 according to one of the aforementioned embodiments.

The satellite 400 is depicted in a simplified manner and can comprise further not shown components.

According to the second aspect of the invention, the satellite 400 is comprising a telescope 470, wherein a telescope 470 is configured to provide the plurality of optical fibres 112 with image data 475. The image data 475 can be further provided by other observational systems, such as a second telescope, an optical reference system, or the like.

Furthermore, the satellite 400 is comprising a communication unit 480 which is arranged and configured to provide the detection signal 432 of the spectrometer 300. In the depicted embodiment of Fig. 4, the communication unit 480 is a unit that is spatially separated from the spectrometer 300. Alternatively, the communication unit 480 can be identical and/or combined with the detection unit of the spectrometer 300. The communication according to Fig. 4 comprises a transfer of the detection signal 432 from the spectrometer 300 to the communication unit 480, which provides the detection signal 432 or a signal that indicates the detection signal 432 to a not shown external device, such as a stationary device on earth.

It shall be understood that the spectrometer 300 according to the first aspect of the invention can be used for a broad range of applications. In case of a short wavelength range, a moderate resolution and a low efficiency, possible applications are: local scrap identification on assembly lines using techniques like laser-induced breakdown spectroscopy; spatial quality control through spectroscopic examination of specific spectral lines, e.g., through fluorescence or Raman scattering; local detection of gases or other materials during flyovers. In case of a wide wavelength range, a high resolution and a high efficiency: versatile spectrometer applications, e.g., in imaging Raman spectroscopy or as an astronomical spectrometer in space. In case of a structured surface grating module with integrated cross-dispenser: compact spectrometers, e.g., for quantum applications, space-based astronomy, or other spectroscopy applications.

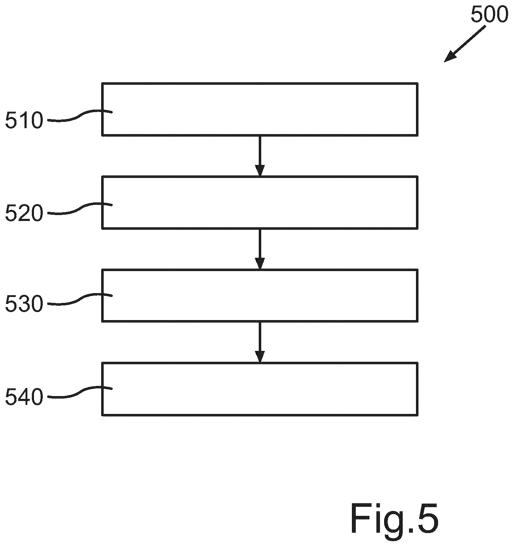

Fig. 5 shows an embodiment of a method 500 according to a third aspect of the invention.

The method 500 is configured for providing a spectrometer. Therefore, it is comprising the steps as given in the following.

A first step 510 is formed by an optical coupling of each optical fibre of a plurality of optical fibres with a respectively allocated waveguide.

A next step 520 is formed by a provision of each allocated waveguide with a grating structure in order to provide a respective light output.

A further step 530 is formed by a reception of the plurality of light outputs and by a detection of optical characteristics within the plurality of light outputs.

A final step 540 is formed by a provision of a detection signal which indicates at least a part of the detected optical characteristics.

The steps 530 and 540 are preferably provided in the given order, while the steps 510 and 520 are provided during a manufacturing process of the spectrometer in any order.

The steps 530 and 540 are repeated during the use of the spectrometer in order to repeatedly provide the detected optical characteristics with the detection signal for the observed objects.

The timespan between step 530 and step 540 is preferably less than 60 seconds, preferably less than 40 seconds, in particular less than 20 seconds.

In a preferred embodiment, the method according to the third aspect of the invention is further comprising the step of providing the grating structures as a structured surface grating module by a lithographic manufacturing process. This further step is preferably executed together with step 520 during the manufacturing of the spectrometer. Alternatively, the structured surface grating module can be produced manually and/or by printing a layer at waveguides.

While the present invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure and the appended claims. In particular the invention is not restricted to its use within telescopes and/or satellite telescopes.

In the claims, the word "comprising" does not exclude other elements or steps, and the indefinite article "a" or "an" does not exclude a plurality.

A single step or other units may fulfill the functions of several items recited in the claims. The mere fact that certain measures are recited in mutually different dependent claims does not indicate that a combination of these measures cannot be used to advantage.

Any reference signs in the claims should not be constructed as limiting the scope.

### LIST OF REFERENCE SIGNS

- 100, 200, 300: Spectrometer
- 110: plurality of optical fibres
- 112: optical fibre
- 114, 314: waveguide
- 120, 320: structured surface grating module
- 121: arrayed waveguide grating
- 122: light output
- 124: grating structure
- 130, 330: detection device
- 132, 432: detection signal
- 134, 334: detector surface
- 240: optical system
- 242: spectrographic image structure
- 250, 250', 350, 350': beam path
- 255: butt-coupling
- 335: predefined area of the detector surface
- 400: satellite
- 470: telescope
- 475: image data
- 480: communication unit
- 500: method
- 510, 520, 530, 540: method steps

## Claims

1. A spectrometer (100), comprising
- a plurality of optical fibres (110), wherein each fibre (112) is coupled with a respectively allocated waveguide (114) within a structured surface grating module (120) of the spectrometer (100),
- the structured surface grating module (120) is configured to provide a plurality of light outputs (122) by providing a grating structure (124) for each allocated waveguide (114), wherein each grating structure (124) provides a respective light output (122) which forms a part of the plurality of light outputs (122),
- a detection unit (130) which is arranged and configured to receive the plurality of light outputs (122), to detect optical characteristics within the plurality of light outputs (122) and to provide a detection signal (132) which indicates at least a part of the detected optical characteristics.

2. The spectrometer (100) according to claim 1, further comprising an optical system (240) which is arranged between the structured surface grating module (120) and the detection unit (130) and which is configured to provide a predefined spectrographic image structure (242) of the plurality of light outputs (122).

3. The spectrometer (100) according to claim 1 or 2, wherein the structured surface grating module (120) and/or the optical system (240) provide a cross-dispersion of the respective light outputs (122).

4. The spectrometer (100) according to at least one of the preceding claims, wherein the structured surface grating module (120) as arranged in combination with an arrayed waveguide grating (121), in particular comprises an arrayed waveguide grating (121).

5. The spectrometer (100) according to at least one of the preceding claims, wherein the allocated waveguides (114) within the structured surface grating module (120) are planar waveguides.

6. The spectrometer (100) according to claim 5, wherein the structured surface grating module (120) is a chip-based structured surface grating module.

7. The spectrometer (100) according to claim 4 or 5, wherein the structured surface grating module (120) is provided on a layered substrate.

8. The spectrometer (100) according to at least one of the preceding claims, wherein the plurality of optical fibres (110) is at least partly formed by single-mode fibres.

9. The spectrometer (100) according to at least one of the preceding claims, wherein optical fibres (112) from the plurality of optical fibres (110) at least partly provide different orientations with respect to the structured surface grating modules (120).

10. The spectrometer (100) according to at least one of the preceding claims, wherein the coupling between an optical fibre (112) from the plurality of optical fibres (110) and the respectively allocated waveguide (114) is provided as a butt-coupling (255) and/or as a coupling via lensed fibres.

11. The spectrometer (100) according to at least one of the preceding claims, wherein the structured surface grating module (120) is provided by a lithographic manufacturing process.

12. The spectrometer (100) according to at least one of the preceding claims, wherein areas (335) of a detector surface (134) of the detection unit (130) correspond to an object to be measured with the spectrometer (100).

13. Satellite (400) comprising at least one spectrometer (100) according to at least one of the preceding claims, wherein a telescope (470) of the satellite (400) is configured to provide the plurality of optical fibres (110) with image data (475), and wherein the satellite (400) is further comprising a communication unit (480) which is arranged and configured to provide the detection signal (132) of the spectrometer (100).

14. Method (500) for providing a spectrometer (100), comprising the steps
- optically coupling each optical fibre (112) of a plurality of optical fibres (110) with a respectively allocated waveguide (114);
- providing each allocated waveguide (114) with a grating structure (124) in order to provide a respective light output (122);
- receiving of the plurality of light outputs (122) and detecting optical characteristics within the plurality of light outputs (122);
- providing a detection signal (132) which indicates at least a part of the detected optical characteristics.

15. A computer program for operating a system comprising program code means for causing a computer to carry out a method (500) according to claim 14.
